# EUROPEAN PATENT SPECIFICATION

(11) **EP 2 827 954 B1**
(45) Date of publication and mention of the grant of the patent: **16.03.2016**
(21) Application number: 13724322.6
(22) Date of filing: 19.03.2013
(51) Int. Cl.: A62B 35/00, E04G 21/32, F16F 7/12, A62B 35/04

(54) **ENERGY ABSORBER AND APPARATUS FOR HEIGHT SAFETY SYSTEMS**
ENERGIEABSORBER UND VORRICHTUNG FÜR HÖHENSICHERHEITSSYSTEME
DISPOSITIF AMORTISSEUR D'ÉNERGIE ET APPAREIL POUR SYSTÈMES DE SÉCURITÉ POUR TRAVAUX EN HAUTEUR

(30) Priority: 19.03.2012 GB 201204770
(43) Date of publication of application: 28.01.2015
(73) Proprietor: Latchways Plc., Devizes, Wiltshire SN10 2JP (GB)
(72) Inventor: RAZVADAUSKAS, Marijus, Devizes Wiltshire SN10 2JP (GB)
(74) Representative: Davies, Gregory Mark
(86) International application number: PCT/GB2013/050713
(87) International publication number: WO 2013/140160

(56) References cited:
- AT-U1- 11 927
- GB-A- 964 095
- GB-A- 2 426 563
- SE-L- 9 002 777
- US-A- 4 791 243

## Description

The present invention relates to height safety apparatus, comprising an energy absorber and anchor system for use fall protection or fall arrest systems.

The height safety apparatus of the present invention particularly comprises an energy absorber and anchor arrangement for use in the context of an anchor system for a safety line and particularly an arrangement on which the height or space envelope for the system is limited. The system and arrangement can be applied to a rigid anchor such as a post or stub fixed to a structure or a safety block for example suspended from and anchor point or gantry for example.

It is well known in the art to attach a safety line to an anchor provided with an energy absorber device which is designed to absorb energy imparted to the anchor via the safety line in the event of a personnel fall and fall arrest event. It is known to use plastically deformable energy absorbers in this context. A plastically deformable energy absorber used in a fall protection system is disclosed in, for example, WO01/87420. This prior art disclosure primarily describes an anchor fixed to the roof of a structure however it will be readily be appreciated that the invention has utility in other arrangements in which an anchor point may need to be provided secured to a structure and the overall depth/height dimension of the anchor needs to be minimised whilst still providing an energy absorption function. SE 9 002 777 discloses a height safety apparatus according to the preamble of claim 1.

An improved arrangement according to claim 1 has now been devised.

The curve-form arm portion is deployed during a fall arrest event by means of a load applied via the attachment element. If the load is of sufficient magnitude the arm plastically deforms by straightening out. Typically the energy absorber rotates on a mounting as this occurs.

It is preferred that the anchor structure further comprises fixing means for securing to a structure.

In certain embodiments it is preferred that the curve-form arm portion is of one turn or less. This provides for a very compact arrangement.

In certain embodiments it is preferred that the curve-form arm portion is arranged horizontally on the level. This provides for a very compact arrangement.

The attachment element preferably projects radially outwardly with respect to the curve form arm absorber. This provides for convenience of attachment to the safety line.

Particularly for use in fixed anchor structures, it may be preferred that the curve-form arm portion is positioned above a lower mounting portion. In such (and other) circumstances it may be preferred that the energy absorber is rotatably mounted with respect to the mounting portion. This provides that the absorber and attachment means can rotate as the user moves about.

It is preferred that the curve form arm portion is connected at one end to a mounting element, the curve form arm portion arcing around the mounting element toward the attachment element.

It is preferred that the curve form arm portion arcs around 90 degrees or more (preferably 180 degrees or more, more preferably 270 degrees or more) toward the attachment element. This provides increasingly long curved portion arm for absorbing energy as it straightens during deployment.

In certain embodiments the mounting element comprises a central aperture. This provides for example for ease of rotationally mounting. In certain embodiments the mounting element, curve-form arm portion and the attachment element are integrally formed with one another.

Typically, the central aperture of the mounting element is mounted to rotate on a cylindrical mounting.

In certain embodiments, the apparatus comprises an anchor structure arranged to be fixed to a structure. Fixing means may be provided which includes a bracket arranged to be secured to the structure. The anchor structure may comprise, for example, a standing post or stub.

In another embodiment, the apparatus may comprise a safety block for suspension from an anchor point.

The invention will now be described, by way of example only, and with reference to the accompanying drawings, in which:
Figure 1 is a schematic view of a first embodiment of a height safety system incorporating an energy absorber according to the invention;

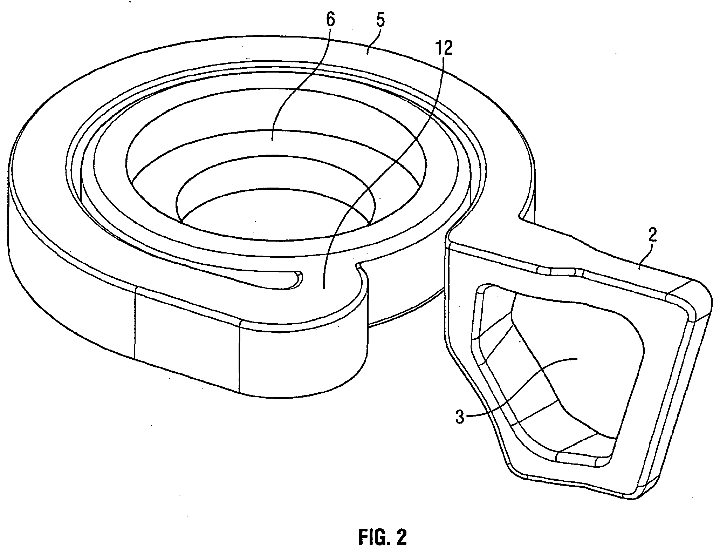

Figure 2 is a perspective view of the energy absorber of figure 1;

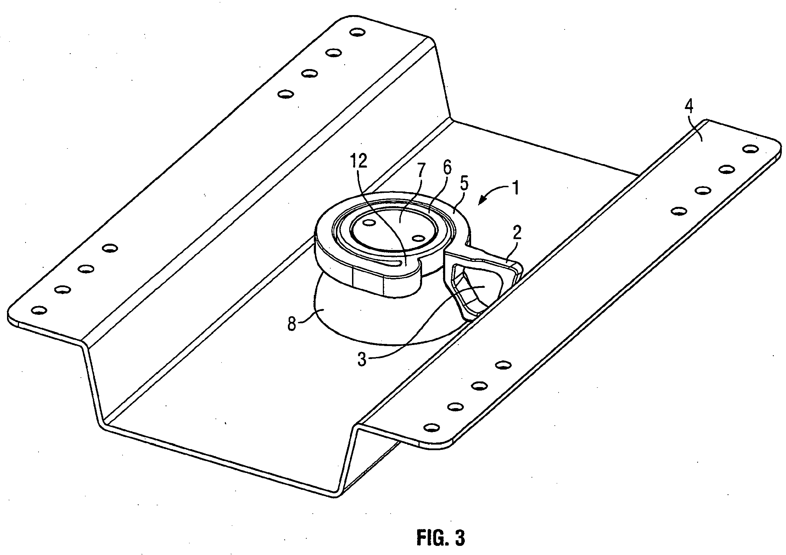

Figure 3 is a perspective view of the height safety system of figure 1;

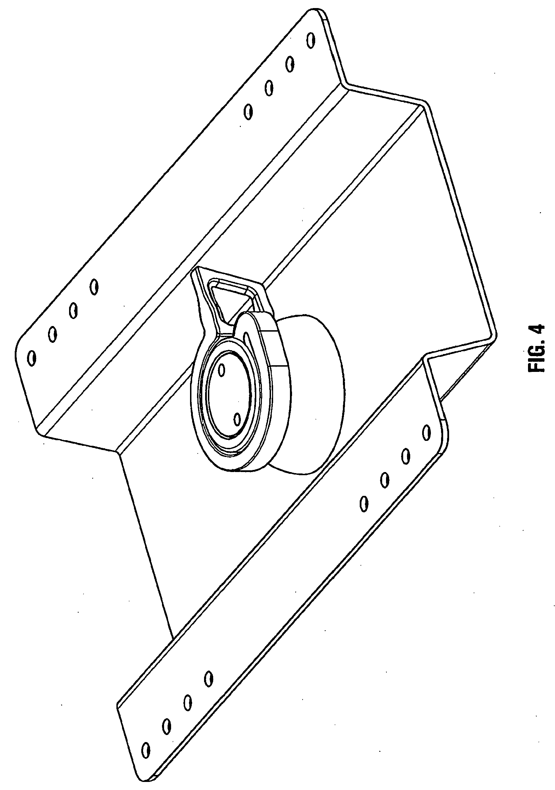

Figure 4 a perspective view of the height safety system of figure 1.

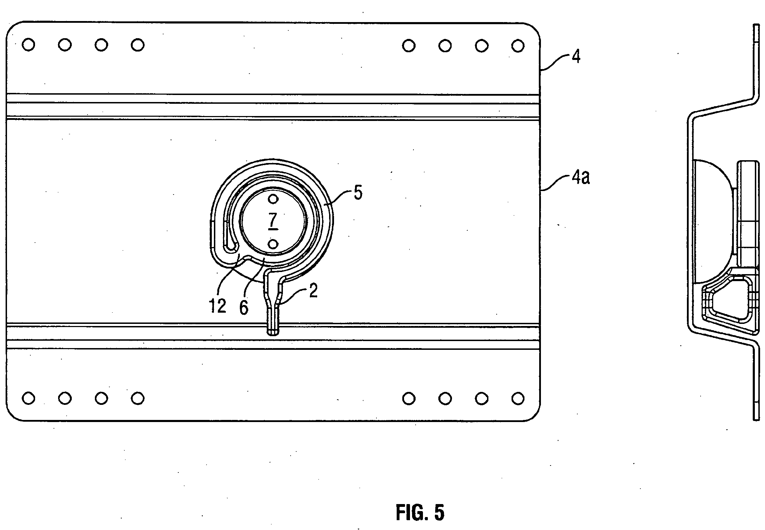

Figure 5 is a plan view of the height safety system of the previous figures.

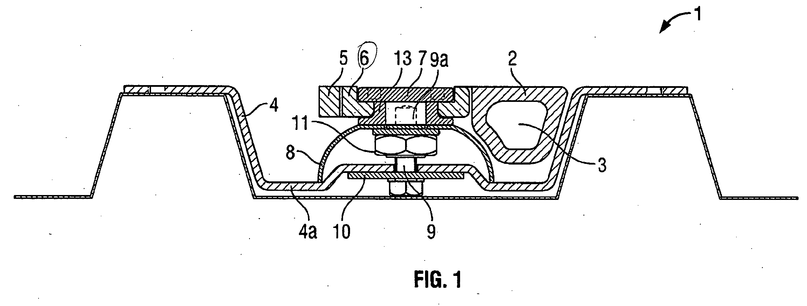

Referring to the drawings, there is shown a safety line anchor system for use in a height safety system for working at height. The anchor system includes an attachment element (load element) 2 having an eyelet 3 through which an attachment karabiner (not shown) at the end of a safety line worn by a user may be secured. The user is thereby secured via the safety line to the anchor system. The anchor system is secured to a substructure such as the roof of a building. In figure 1, the anchor system is shown including a bracket 4 which is profiled to seat in a profiled metal skin roof structure, for example of a portable building. In the embodiment shown the profiled metal bracket 4 has a trough portion 4a within which the anchor structure 1 is positioned.

The overall height of the anchor structure 1 is arranged such that it does not project significantly above the height of the trough 4a. This enables portable buildings to be stacked one on top of another with the anchor systems effectively permanently secured in position and without the need for dismantling and removal. Additionally, the low profile of the anchor system ensures that it constitutes less of a trip hazard to personnel moving on the roof structure 4. The bracket 4 is bolted to the roof of the structure (e.g. the portable building).

The anchor system includes an energy absorber curve-form arm 5 formed of stainless steel (for example) integrally with the attachment element 2 and a central mounting boss 6. The energy absorber is plastically deformable in tension subject to an applied deployment load. The deployment load is applied via the attachment element 2 which projects radially outwardly from the curve-form arm 5 at it's distal end. During deployment the curve-form arm plastically deforms straightening and the load element moves away from the central boss 6. Typically the central boss 6 will rotate on it's mounting as will be described. An applied load of sufficient magnitude is typically generated during a fall arrest event.

In the embodiment shown, the curve-form arm 5 arcs about the central boss 6 from a proximal end neck portion 12 connecting with the boss 6, through over 270 degrees to the attachment element 2. The arm is therefore less than a complete turn and is positioned substantially horizontally on the level, such that it lies nested within the roof skin panel trough 4a to which the anchor is secured. This provides a low profile for the anchor system. Essentially, in the embodiment described, the energy absorber 5 comprises a plastically deformable element comprising a curve form arm length of one turn or less, extending transversely about an upright axis. This provides a particularly compact arrangement.

The central boss 6 is mounted for rotation on a hub 13 which is secured to the end 9a of a mounting bolt 9. The arrangement is dimensioned to permit the energy to rotate through 360 degrees, adequate clearance being provided from the walls of the trough portion 4a of the bracket 4. The mounting bolt 9 is provided with a head which tightens against a washer plate 10 and the shaft extends through the base of the base bracket 4. The threaded shaft of bolt 9 carries a nut 11 which tightens the hub 13 against the upper surface of a dome stub cover 8. The dome stub cover 8 has a sidewall that extends downwardly to have a peripheral free edge in contact with the base plate 4 in order to enclose the bolt 9 and nut 11 thereby shielding the bolt 9 and nut 11 from the weather. A cap 7 closes the open upper portion of the boss 6.

In use, a user desiring to move over the roof surface to which the anchor system is attached can attach the karabiner at the end of their lifeline to the eyelet 3 of the attachment element 2. The eyelet 3 is orientated transversely to the mounting aperture of boss 6 of the energy absorber and the attachment element 2 projects radically outwardly from the arm 5. The attachment element 2 will rotate as the user moves about the anchor system. In the event of a fall over the edge of the roof surface, the lifeline becomes taught and the user is suspended from the anchor point. The energy in the fall is sufficient that when the lifeline becomes taught the curve-form arm 5 straightens (in so doing plastically deforming and absorbing energy) as the attachment element 2 moves in a direction away from the central boss, which remains fixed by bolt 9 to the base bracket plate 4. the curve-form arm portion 5 of the energy absorber straightens by extending in plastic deformation which absorbs the energy of the fall. When the curve-form arm portion is fully straightened and extended to a maximum extent, the fall is completely arrested and maximum energy absorption has taken place.

The invention has been primarily described in relation to an anchor fixed to the roof of a structure however it will be readily be appreciated that the invention has utility in other arrangements in which an anchor point may need to be provided secured to a structure and the overall depth/height dimension of the anchor needs to be minimised whilst still providing an energy absorption function.

Furthermore the energy apparatus can be utilised in other energy absorbing situations such as safety blocks suspended from overhead anchor points or horizontal lifeline systems.

## Claims

1. Height safety apparatus comprising a bracket (4) profiled to seat in a profiled roof structure, and an anchor structure (1) including a mount for rotatably mounting an energy absorber apparatus, the energy absorber apparatus comprising:
an attachment element (2) for securing to a personnel safety line;
an energy absorber (5) comprising a plastically deformable element having a curve-form arm portion;
the energy absorber (5) and attachment element (2) being formed integrally with one another: and arranged to be mounted to be rotatable together about a central axis; the attachment element (2) is provided at a distal end of the plastically deformable energy absorber (5) curve-form arm portion which extends around the central axis on substantially one plane **characterized in that** the bracket (4) includes a trough (4a) portion within which is positioned the anchor structure (1),
wherein clearance is provided between the walls of the trough (4a) to permit the rotatably mounted energy absorber apparatus to rotate through 360 degrees in the trough (4a).

2. Apparatus according to claim 1, wherein the anchor structure (1) further comprises fixing means for securing to a structure;

3. Apparatus according to claim 2, wherein the curve-form arm portion is of one turn or less.

4. Apparatus according to any preceding claim, wherein the curve-form arm portion is arranged horizontally on the level.

5. Apparatus according to any preceding claim, wherein the attachment element (2) projects radially outwardly with respect to the curve-form arm absorber (5) and preferably includes an eyelet (3) which has an aperture orientated transversely to a mounting aperture of the energy absorber (5).

6. Apparatus according to any preceding claim, wherein the curve-form arm portion is positioned above a lower mounting portion.

7. Apparatus according to claim 6, wherein the energy absorber (5) is rotatably mounted with respect to the mounting portion.

8. Apparatus according to any preceding claim wherein the curve form arm portion is connected at one end to a mounting element, the curve form arm portion arcing around the mounting element toward the attachment element (2).

9. Apparatus according to claim 8, wherein the curve form arm portion arcs around 270 degrees or more toward the attachment element (2).

10. Apparatus according to any of claims 8 or 9, wherein the mounting element (6) comprises a central aperture.

11. Apparatus according to claim 10, wherein the central aperture of the mounting element (6) is mounted to rotate on a cylindrical mounting (13).

12. Apparatus according to any preceding claim wherein the apparatus comprises the anchor structure (1) arranged to be fixed to a structure.

13. Apparatus according to claim 12, wherein fixing means is provided which includes a bracket (4) arranged to be secured to the structure.

14. Apparatus according to claim 12 or claim 13, wherein the anchor structure (1) comprises a standing post.

15. Height safety apparatus according to any preceding claim, wherein the overall height of the anchor structure (1) is such that it does not project above the height of the trough (4a).

## Patentansprüche

1. Höhensicherungsvorrichtung mit einer Halterung (4), die für ein Sitzen in einer profilierten Dachstruktur profiliert ist, und einer Ankerstruktur (1) mit einer Aufnahme zum drehbaren Anbringen einer Energieabsorptionsvorrichtung, wobei die Energieabsorptionsvorrichtung umfasst:
ein Anbringelement (2) zum Sichern an einer Personensicherheitsleine,
einen Energieabsorber (5) mit einem plastisch deformierbaren Element mit einem kurvenförmigen Armabschnitt,
wobei der Energieabsorber (5) und das Anbringelement (2) integral miteinander geformt und dazu ausgestaltet sind, miteinander um eine zentrale Achse rotierbar anbringbar zu sein, wobei das Anbringelement (2) an einem distalen Ende des kurvenförmigen Armabschnitts des plastisch deformierbaren Energieabsorbers (5) vorgesehen ist, der sich im Wesentlichen in einer Ebene um die zentrale Achse erstreckt,
**gekennzeichnet dadurch**,
die Halterung (4) einen Trogabschnitt (4a) aufweist, innerhalb dessen die Ankerstruktur positioniert ist,
wobei ein Freiraum zwischen den Wänden des Trogs (4a) vorgesehen ist, um der rotierbar angebrachten Energieabsorbervorrichtung zu erlauben, um 360 Grad in dem Trog (4a) zu rotieren.

2. Vorrichtung nach Anspruch 1, wobei die Ankerstruktur (1) ferner Fixiermittel zum Sichern an einer Struktur aufweist.

3. Vorrichtung nach Anspruch 2, wobei der kurvenförmige Armabschnitt eine Windung oder weniger aufweist.

4. Vorrichtung nach einem der vorstehenden Ansprüche, wobei der kurvenförmige Armabschnitt tatsächlich horizontal angeordnet ist.

5. Vorrichtung nach einem der vorstehenden Ansprüche, wobei das Anbringelement (2) sich radial auswärts hinsichtlich des kurvenförmigen Armabsorbierers (5) erstreckt und vorzugsweise eine Öse (3) aufweist, die eine Öffnung aufweist, die transvers zu einer Anbringöffnung des Energieabsorbers (5) orientiert ist.

6. Vorrichtung nach einem der vorstehenden Ansprüche, wobei der kurvenförmige Armabschnitt oberhalb eines unteren Aufnahmeabschnitts positioniert ist.

7. Vorrichtung nach Anspruch 6, wobei der Energieabsorber (5) rotierbar hinsichtlich des Aufnahmeabschnitts angebracht ist.

8. Vorrichtung nach einem der vorstehenden Ansprüche, wobei der kurvenförmige Armabschnitt an einem Ende mit einem Aufnahmeelement verbunden ist, wobei sich der kurvenförmige Armabschnitt um das Aufnahmeelement zum Anbringelement (2) bogenförmig erstreckt.

9. Vorrichtung nach Anspruch 8, wobei sich der kurvenförmige Armabschnitt um 270 Grad oder mehr bogenförmig zum Befestigungselement (2) erstreckt.

10. Vorrichtung nach einem der Ansprüche 8 oder 9, wobei das Aufnahmeelement (6) eine zentrale Öffnung aufweist.

11. Vorrichtung nach Anspruch 10, wobei die zentrale Öffnung des Aufnahmeelements (6) angebracht ist, um auf einer zylindrischen Aufnahme (13) zu rotieren.

12. Vorrichtung nach einem der vorstehenden Ansprüche, wobei die Vorrichtung die Ankerstruktur (1) umfasst, die angeordnet ist, an einer Struktur fixiert zu werden.

13. Vorrichtung nach Anspruch 12, wobei ein Fixiermittel vorgesehen ist, das eine Halterung (4) aufweist, die ausgestaltet ist, an der Struktur gesichert zu werden.

14. Vorrichtung nach Anspruch 12 oder 13, wobei die Ankerstruktur (1) einen Standpfosten umfasst.

15. Höhensicherungsvorrichtung nach einem der vorstehenden Ansprüche, wobei die Gesamthöhe der Ankerstruktur (1) derart ist, dass sie sich nicht über die Höhe des Trogs (4a) hinaus erstreckt.

## Revendications

1. Appareil de sécurité pour travaux en hauteur comprenant un support (4) profilé pour siéger dans une structure de toit profilé et une structure d'ancrage (1) incluant une monture pour le montage autorisant la rotation d'un appareil absorbeur d'énergie, l'appareil absorbeur d'énergie comprenant :
un élément d'attache (2) pour la fixation à une ligne de sécurité personnelle ;
un absorbeur d'énergie (5) comprenant un élément déformable plastiquement présentant une partie de bras courbée ;
l'absorbeur d'énergie (5) et l'élément d'attache (2) étant formés intégralement l'un avec l'autre ; et étant agencés pour être montés de sorte à pouvoir tourner ensemble autour d'un axe central ; l'élément d'attache (2) est prévu sur une extrémité distale de la partie de bras courbée de l'absorbeur d'énergie déformable plastiquement (5) qui s'étend autour de l'axe central sur sensiblement un plan, **caractérisé en ce que**
le support (4) incluant une partie de creux (4a), dans laquelle est positionnée la structure d'ancrage (1),
dans lequel un espacement est prévu entre les parois du creux (4a) pour permettre à l'appareil absorbeur d'énergie monté de manière rotative de tourner à 360 degrés dans le creux (4a).

2. Appareil selon la revendication 1, dans lequel la structure d'ancrage (1) comprend en outre des moyens de fixation pour la fixation à une structure.

3. Appareil selon la revendication 2, dans lequel la partie de bras courbée présente un tour ou moins.

4. Appareil selon l'une quelconque des revendications précédentes, dans lequel la partie de bras courbée est agencée horizontalement sur le niveau.

5. Appareil selon l'une quelconque des revendications précédentes, dans lequel l'élément d'attache (2) fait saillie radialement vers l'extérieur par rapport à l'absorbeur de bras courbé (5) et inclut de préférence un oeillet (3) qui a une ouverture orientée transversalement à une ouverture de montage de l'absorbeur d'énergie (5).

6. Appareil selon l'une quelconque des revendications précédentes, dans lequel la partie de bras courbé est positionnée au-dessus d'une partie de montage inférieure.

7. Appareil selon la revendication 6, dans lequel l'absorbeur d'énergie (5) est monté de manière à pouvoir tourner par rapport à la partie de montage.

8. Appareil selon l'une quelconque des revendications précédentes, dans lequel la partie de bras courbé est reliée à une extrémité à un élément de montage, la partie de bras courbé formant un arc autour de l'élément de montage vers l'élément d'attache (2).

9. Appareil selon la revendication 8, dans lequel la partie de bras courbé forme un arc d'environ 270 degrés ou plus vers l'élément d'attache (2).

10. Appareil selon l'une quelconque des revendications 8 ou 9, dans lequel l'élément de montage (6) comprend une ouverture centrale.

11. Appareil selon la revendication 10, dans lequel l'ouverture centrale de l'élément de montage (6) est montée pour tourner sur un montage cylindrique (13).

12. Appareil selon l'une quelconque des revendications précédentes, dans lequel l'appareil comprend la structure d'ancrage (1) agencée pour être fixée à une structure.

13. Appareil selon la revendication 12, dans lequel un moyen de fixation est prévu, lequel inclut un support (4) agencé pour être fixé à la structure.

14. Appareil selon la revendication 12 ou 13, dans lequel la structure d'ancrage (1) comprend un poteau vertical.

15. Appareil de sécurité pour travaux en hauteur selon l'une quelconque des revendications précédentes, dans lequel la hauteur totale de la structure d'ancrage (1) est telle qu'elle ne fait pas saillie au-dessus de la hauteur du creux (4a).
